(19) Europäisches Patentamt / European Patent Office / Office européen des brevets

(11) **EP 3 524 647 A1**

(12) **EUROPEAN PATENT APPLICATION**

(43) Date of publication:
**14.08.2019 Bulletin 2019/33**

(51) Int Cl.:
***C09D 11/00*** (2014.01)   ***B32B 27/20*** (2006.01)

(21) Application number: **18156380.0**

(22) Date of filing: **12.02.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(71) Applicant: **Hubergroup Italia
36050 Bolzano Vicentino (VI) (IT)**

(72) Inventors:
• **GIANETTI, Giuseppe
21047 Saronne (VA) (IT)**

• **CIRIELLO, Giuseppe
51037 Montale (PT) (IT)**
• **NICOLIN, Adriano
35010 San Pietro in Gu' (PD) (IT)**
• **SALZWEDEL, Tim
34346 Hann Münden (DE)**
• **FRISCHMANN, Lutz Dr.
85737 Ismaning (DE)**
• **KLAUSNITZER, Sylvia Dr.
83052 Bruckmühl (DE)**

(74) Representative: **Henkel, Breuer & Partner
Patentanwälte
Maximiliansplatz 21
80333 München (DE)**

(54) **INK LAYER SEQUENCE WITH COLOUR FLOP EFFECT WITHOUT CONTAINING INTERFERENCE PIGMENTS**

(57)   The present invention relates to a system, which comprises:
a) a lower layer containing white pigment,
b) on the lower layer at least one first colour layer containing a dye and/or pigment being different from the white pigment contained in the lower layer and being no metallic pigment,
c) on the at least one first colour layer a metallic layer containing at least one metallic pigment and
d) on the metallic layer at least one second colour layer containing a dye and/or pigment being different from the white pigment contained in the lower layer and being no metal effect pigment.

Fig. 1

**Description**

The present invention relates to a system, such as system of inks or a system comprising a substrate which is coated with a system of inks, wherein the system exhibits a colour flop effect, even if the system does not contain any interference pigment.

Systems, such as objects or substrates, respectively, coated for instance with inks, wherein the inks impart a colour flop effect show a change of a colouristic property under different viewing angles or observation angles, respectively. Such effects are called flop effects or flip-flop effects, respectively. The colouristic property, which changes under different observation angles, may be the brightness or colour shade of the ink. More specifically, a change of the brightness of a printed object in dependency of the observation angle is typically called brightness flop effect, whereas a change of the colour shade of a printed object in dependency of the observation angle is referred to as colour shade flip-flop effect or a colour travel effect.

Inks imparting an object coated therewith with such a flip-flop effect are for instance interesting for coating objects used for safety applications, such as for forgery-proof security papers, such as banknotes, credit cards, postage stamps, telephone cards and identity cards.

In order to impart an ink a colour shade flip-flop effect, holographic foils are often used. For the same purpose, also usually interference pigments are added into the ink. Such interference pigments comprise at least two different layers, which cause a reflection of parts of the light waves at different planes and a refraction of a part of the light waves, so that the light waves reflected from the different planes travel different distances leading to an interference. Interference is a phenomenon in which two waves superpose to form a resultant wave of greater, lower or the same amplitude. Interference usually refers to the interaction of waves that are correlated or coherent with each other, either because they come from the same source or because they have the same or nearly the same frequency. Interference effects can be observed with all types of waves, for example, light, radio, acoustic, surface water waves or matter waves. Examples for such interference pigments are for instance carrier platelets, such as alumina platelets or silica platelets, which are coated with high-refractive metal oxides, such as with titanium dioxide and iron(III)oxide.

US 7,077,897 B2 describes a multilayer interference pigment for security applications, which consists of a transparent support material which is coated with alternating layers of colourless, non-absorbent metal oxides of high and low refractive indices, with the difference between the refractive indices being at least 0.1. The respective pigment is obtainable by alternate coating of the transparent support material with a metal oxide of high refractive index and a metal oxide of low refractive index by a wet process by hydrolysis of the corresponding, water-soluble, inorganic metal compounds, and separating off, drying and optionally calcining the resultant pigment.

However, known inks based on interference pigments are expensive due to the complex structure of the interference pigments and the laborious production process for synthesizing the interference pigments. Another important disadvantage of known inks based on interference pigments is that each of these inks can only be used for one specific colour shade flip-flop, for example red-green.

In view of this, the object underlying the present invention is to provide an ink sequence, which imparts an object coated therewith with a flip-flop effect and particularly a colour shade flip-flop effect, but which is nevertheless cost efficient, because it does not need to include any interference pigment. Moreover, the ink sequence, respectively, shall be easily adjustable for any desired colour shade flip-flop effect.

In accordance with the present invention, this object is satisfied by providing a system, such as an ink sequence, which comprises:

a) a lower layer containing white pigment,
b) on the lower layer at least one first colour layer containing a dye and/or pigment being different from the white pigment contained in the lower layer and being no metallic pigment,
c) on the at least one first colour layer a metallic layer containing at least one metallic pigment and
d) on the metallic layer at least one second colour layer containing a dye and/or pigment being different from the white pigment contained in the lower layer and being no metal effect pigment.

This solution bases on the surprising finding that by arranging a metallic layer c) containing at least one metallic pigment above a lower layer a) containing white pigment, wherein both layers are separated by at least a first colour layer b) containing a dye and/or pigment different from the white pigment, and by arranging at least a second colour layer d) above the metallic layer c), a system, such as an ink system, is obtained, which shows a colour shade flip-flop effect, i.e. which shows a change of the colour shade in dependency of the observation angle. Without being committed to any particular theory, it is believed that this effect is due to the fact that the metallic layer c) reflects and scatters a significant amount of the incident visible light, whereas most of the remaining visible light entering into the first coloured layer b) being located underneath the metallic layer c) is reflected and scattered by the optically dense lower layer containing the white pigment. Moreover, due to the nature of the metallic pigment, the transparency of the metallic layer c) in the vertical direction is comparably high, whereas the transparency of the metallic layer c) in the horizontal direction and at angles close to the horizontal direction is much lower. In other words, a high percentage of light being irradiated in vertical direction or close to the vertical direction onto the system passes without significant reflection and scattering through the layers d), c) and b) into layer a), whereas only a low percentage of light being irradiated close to the horizontal direction onto the system passes through the layers d), c) and b) into layer a), because a significant percentage thereof is reflected and/or scattered in particular by the metallic layer c). Therefore, this effect is dependent upon the angle of observation. At a low observation angle of say 25° with regard to the horizontal direction, the metallic layer c) significantly reflects the light, so that essentially only the colour of the second colour layer d) above the metallic layer b) becomes visible. At a more vertical observation angle of say 45°, 60° or 70° with regard to the horizontal direction, which is close to the vertical direction, the metallic layer c) is sufficiently transparent, so that the combined colour of all colour layers b) and d) becomes visible. This flip-flop effect in connection with the specific absorption of certain light wavelengths in the first and second colour layers b) and d) leads to the colour shade flip-flop effect. Since no interference pigments are necessary, but only standard dyes and pigments, respectively, the ink system according to the present invention is cost efficient. Moreover, since any known dye and/or pigment may be used for the first colour layer b), for the second colour layer d) and for any possible further optional colour layer, the colour shade effect can be tailored upon desire to a desired colour shade. All in all, the present invention allows formulating an ink sequence showing any desired colour shade flip-flop effect.

As set out above, good results are in particular obtained, when the metallic ink layer c) has a comparable high transparency in the vertical direction and at angles close to the vertical direction, whereas the transparency of the metallic layer c) in the horizontal direction and at angles close to the horizontal direction is much lower. Preferably, the metallic layer c) has in the vertical direction a transparency defined as ratio of visible light passing through the metallic layer c) divided by the intensity of incident visible light entering the metallic layer c) in the vertical direction of 40 to 90%. In other words, 10 to 60% of the visible light entering the metallic layer c) in the vertical direction is reflected and scattered by the metallic layer c), i.e. in particular by the metallic pigment(s) contained in the metallic layer c). The percentage of reflectance and scattering is defined as $(I_1/I_{10})*100$, wherein $I_{10}$ is the intensity of visible light entering into the metallic layer c) in the vertical direction and $I_1$ is the intensity of visible light having been entered into the metallic layer c) in the vertical direction which has been reflected and scattered by the metallic layer c). Moreover, it is preferred that 30 to 100%, more preferably more than 60 to 100% and even more preferably 90 to 100% of the visible light entering the metallic layer c) at an angle of 25° with respect to the horizontal direction is reflected and scattered by the metallic layer c). In addition, it is preferred that 30 to 90%, more preferably 40 to 80% and even more preferably 40 to 70% of the visible light entering the metallic layer c) at an angle of 45° with respect to the horizontal direction is reflected and scattered by the metallic layer c). In any case, for the same system the percentage of reflectance and scattering of the metallic layer c) at an angle of 25° with respect to the horizontal direction is higher than the percentage of reflectance and scattering of the metallic layer c) at an angle of 45° with respect to the horizontal direction and the percentage of reflectance and scattering of the metallic layer c) in the vertical direction is lower than the percentage of reflectance and scattering of the metallic layer c) at an angle of 45° with respect to the horizontal direction. Preferably, the difference between the sum of reflectance and scattering of the metallic layer c) at an angle of 25° and that of the metallic layer c) at an angle of 45° is at least 5% and preferably at least 10%. Likewise thereto, it is preferred that the difference between the sum of reflectance and scattering of the metallic layer c) at an angle of 45° and that of the metallic layer c) in the vertical direction is at least 5% and preferably at least 10%.

In accordance with another preferred embodiment of the present invention, seen in the vertical direction, the lower layer a) has a sum of reflectance and scattering defined as $(I_2/I_{20})*100$ of more than 50%, more preferably of at least 75%, even more preferably of at least 90% and most preferably of at least 95%, such as of 100%, wherein $I_{20}$ is the intensity of visible light entering into the lower layer a) in the vertical direction and $I_2$ is the intensity of visible light being reflected and scattered by the lower layer a).

In accordance with still another preferred embodiment of the present invention, seen in the vertical direction, the sum of total reflectance and scattering of the metallic layer c) and of the lower layer a) defined as $((I_1+I_2)/I_{10})*100$ is at least 50%, more preferably of at least 75% and more preferably of at least 85%, wherein $I_{10}$, $I_1$ and $I_2$ are as defined above.

In order to measure the flip-flop effect, it is preferred that visible light is irradiated on the system in a dark environment at an incident angle of 45°. The light is reflected and scattered by the system and the colour of the reflected and scattered light is measured at different viewing angles. Traditionally, a five angle colour measurement offers a convenient solution. Examples for the angles at which the colour of the reflected and scattered light is measured are defined further below. Measurements at more or less different angles are also suitable for detection of the colour travel. Besides visual light other standardized light types can be used, e.g. A, C, D50, D65, F2, F7, F11 or F12.

In order to have a significant flip-flop effect, it is proposed in accordance with a further development of the idea of the present invention that at least at an angle of 0 to 45° with respect to the horizontal direction the colour shade of the visible light being reflected and scattered by the metallic layer c) is different to the colour shade of the visible light being reflected by the lower layer a).

In principle, the present invention is not specifically limited to the kind of white pigment, which is included in the lower layer a), as long as it has good reflectance and scattering properties. Good results are in particular obtained, when the white pigment included in the lower layer a) is selected from the group consisting of titanium dioxide, barium sulfate, zinc oxide, zinc sulfide, lead carbonate, calcium carbonate, aluminium oxide, aluminium silicate and arbitrary combinations of two or more of the aforementioned substances.

In principle the substrate can be any substrate with a white surface, such as paper, cardboard, white foils/films, white glass, white textiles, white nonwovens, white silicone substrates or white wood substrates. When the substrate is white by nature it represents the lower layer a) in the present invention. When the surface of a substrate is not white by nature it can be coated with a white coating, wherein then the coating is the lower layer a) according to the present invention.

In accordance with a first particularly preferred embodiment of the present invention, the lower layer a) is a white foil/film. In this embodiment, the lower layer a), i.e. the foil/film, preferably contains 0.1 to 10% by weight, more preferably 0.25 to 4% by weight and still more preferably 0.75 to 1.5% by weight of white pigment based on the total weight of the lower layer a). Good results are in particular obtained, when the foil/film has a thickness of preferably 1 to 100 $\mu$m, more preferably of 2 to 50 $\mu$m and most preferably of 10 to 30 $\mu$m.

In accordance with a second particularly preferred embodiment of the present invention, the lower layer a) is a paper. In this embodiment, the lower layer a), i.e. the paper, preferably contains 0.1 to 50% by weight, more preferably 1 to 10% by weight and still more preferably 3 to 7% by weight of white pigment based on the total weight of the lower layer a). Good results are in particular obtained, when the paper has a thickness of at least 10 $\mu$m. Thicker papers or even cardboards are also most suitable.

In accordance with a third particularly preferred embodiment of the present invention, the lower layer a) is an ink. In this embodiment, the lower layer a), i.e. the ink, preferably contains 10 to 90% by weight and preferably 30 to 90% by weight of white pigment based on the total weight of the lower layer a). Good results are in particular obtained, when the ink has a thickness of preferably 1 to 10,000 $\mu$m.

Particularly good results are obtained, when the white pigment included in the lower layer a) is titanium oxide and most preferably rutile. In this embodiment, the titanium oxide and preferably rutile is present in the form of particles having an average $d_{50}$ particle size of 0.1 to 50 $\mu$m, preferably of 0.1 to 10 $\mu$m and more preferably of 0.2 to 0.5 $\mu$m. If the lower layer a) is a substrate like cardboard or glass, the pigment particles can be bigger; for thin films, white inks and coatings a smaller particle size is more preferred.

The remainder of the lower layer a) in case the lower layer a) is an ink layer may be composed of binder, solvent, and/or additives.

Preferably, in case the lower layer a) of the system in accordance with the present invention is an ink layer, it contains, depending on the ink film thickness and the type of ink, 10 to 90% by weight of binder based on the total weight of the lower layer a). The present invention is not particularly limited concerning the kind of binder included in the lower layer a). However, it is preferred that the binder is selected from the group consisting of polyesters, polyethers, polyurethanes, polyamides, polyacrylates, maleinate resins, collophonium resins, ketone resins, alkyd resins, collophonium modified phenolic resins, hydrocarbon resins, silicates, silicones, silanes, phenolic resins, urea resins, melamine resins, polyterpene resins, polyvinylalcohols, polyvinylacetates, polyvinylchloride, polyvinylethers, polyvinylpropionates, polymethacrylates, polystyrenes, polyolefines, coumarone-indene resins, aromatic formaldehydre resins, carbamide acid resins, sulfonamide resins, chlorinated resins, nitrocellulose, CAB (cellulose acetate butyrate), CAP (cellulose acetate propionate), cellulose compounds, rubbers, radiation curing resins and arbitrary combinations of two or more of the aforementioned binders.

In addition to the binder or instead of the binder, the lower layer a) of the system in accordance with the present invention may contain more than 0 to 100% by weight of solvent, based on the total weight of the lower layer a). The solvent amount depends on the ink system, the application and the pigment content. Good results are in particular obtained, when the solvent is selected from the group consisting of mineral oils, vegetable oils, fatty acid esters, alcohols, esters, ethers, glycols, water, aromatic compounds, water, monomers and oligomers with hydroxy, carboxy, alkoxy, amino, acrylic or vinyl functionality and arbitrary combinations of two or more of the aforementioned solvents.

Furthermore, the lower layer a) may contain one or more additives. Examples for such additives are those selected from the group consisting of rheological additives, adhesives, defoamers, slip additives, anti-corrosion additives, gloss additives, waxes, wetting agents, curing agents, chelating agents, photoinitiators, inhibitors, desiccants, stabilizers, emulsifiers, pH adjustment additives, abrasion resistance additives, plasticizers, antistatic additives, preservatives, light protection agents, matting agents and arbitrary combinations of two or more of the aforementioned additives.

In a further development of the idea of the present invention, it is proposed that the metallic layer c) of the system in accordance with the present invention is an ink, which contains 10 to 70% by weight, preferably 20 to 70% by weight, still preferably 30 to 70% by weight and more preferably 40 to 70% by weight of metallic pigment and preferably of metal effect pigment based on the total weight of the metallic layer.

It is preferred that the metallic layer c) is an ink having a pigment binder ratio of 0,3:1 to 2:1, more preferably of 0,7:1 to 2:1 and even more preferably of 0,7:1 to 1,8:1.

Preferably, the metallic pigment included in the metallic layer c) is selected from the group consisting of silver and gold pigments, e.g. Stapa AE 8 NL/80 Aluminium, Metalstar 07 0095 Silver, Aluminium Stapa AE Reflexal VIII/80, Stapa Reflexal 88 NL/80, Metalstar 06 7000 Silver, Rotoflex XA 6-203 Bleichgold, Rotoflex XA 6-206 Reichbleichgold, Rotoflex XA 6-209 Reichgold, RotoVario 530080 Silver, Rotovario 500 042 Silver, Rotovario 500022 Silber, Hydro Pellet 1300, Rotovario 500001 Silber from Eckart, or Decomet 1010/10, Grandor 4140 Reichgold, Grandor 4140 Reichbleichgold, Grandor 4140 Bleichgold from Schlenk, or Silvet ET 2016 from Silberline and arbitrary combinations of two or more of the aforementioned substances. In addition the metallic layer c) can also contain one or more non-metallic pigments or dyes.

Good results are in particular obtained, when the metallic pigment included in the metallic layer c) is present in the form of platelets having an average $d_{50}$ size of 2 to 3000 $\mu$m. Bigger particles are preferred for higher film thicknesses and smaller particles are preferred for printing inks.

The metallic layer c) of the system in accordance with the present invention may have a thickness of 0.1 to 50 $\mu$m, more preferably of 0.5 to 20 $\mu$m and most preferably of 1 to 10 $\mu$m.

Preferably, the metallic layer c) of the system in accordance with the present invention contains, depending on the metallic layer thickness, the viscosity and the application method, 10 to 95% by weight of binder based on the total weight of the metallic layer, wherein the binder is preferably selected from the group consisting of polyesters, polyethers, polyurethanes, polyamides, polyacrylates, maleinate resins, collophonium resins, ketone resins, alkyd resins, collophonium modified phenolic resins, hydrocarbon resins, silicates, silicones, phenolic resins, urea resins, melamine resins, polyterpene resins, polyvinylalcohols, polyvinylacetates, polyvinylchloride, polyvinylethers, polyvinylpropionates, polymethacrylates, polystyrenes, polyolefines, coumarone-indene resins, aromatic formaldehyde resins, carbamide acid resins, sulfonamide resins, chlorinated resins, nitrocellulose, CAB (cellulose acetate butyrate), CAP (cellulose acetate propionate), cellulose compounds, rubbers, radiation curing resins and arbitrary combinations of two or more of the aforementioned binders.

In addition to the binder or instead of the binder, the metallic layer c) may contain, depending on the nature and the viscosity of the ink and the application method, more than 0 to 95% by weight of solvent based on the total weight of the metallic layer c). Good results are in particular obtained, when the solvent is selected from the group consisting of mineral oils, vegetable oils, fatty acid esters, alcohols, esters, ethers, glycols, water, monomers and oligomers with hydroxy, carboxy, alkoxy, amino, acrylic or vinyl functionality aromatic compounds and arbitrary combinations of two or more of the aforementioned solvents.

Furthermore, the metallic layer c) may contain one or more additives. Examples for such additives are those selected from the group consisting of rheological additives, adhesives, defoamers, slip additives, anti-corrosion additives, gloss additives, waxes, wetting agents, curing agents, chelating agents, photoinitiators, inhibitors, desiccants, stabilizers, emulsifiers, pH adjustment additives, abrasions resistance additives, plasticizers, antistatic additives, preservatives, light protection agents, matting agents and arbitrary combinations of two or more of the aforementioned additives.

It has been found within the present invention that the degree of the obtained flip-flop effect of the system is influenced by the ink coverage, the ink film thickness and the pigment content of the dry ink film. Since the colour pigments that are used in printing inks are basically transparent, the most impact on the colour travel is due to the metallic ink. Preferably, the ink coverage of the metallic layer c) on the at least one first colour layer b), i.e. on the upperst of the first colour layer(s), is 40 to 100%, more preferably 70 to 100%, even more preferably 80 to 100% and most preferably 90 to 100%. The ink coverage is the percentage of the area of the upperst of the first colour layer(s), which is covered by the metallic layer c). This embodiment is particularly suitable, if the metallic layer c) contains metallic pigments having an average $d_{50}$ particle size of 5 to 15 $\mu$m.

In a further development of the idea of the present invention, it is proposed that the dry laydown of the metallic layer c) is 0.2 to 2 gsm, more preferably 0.3 to 1.5 gsm and most preferably 0.4 to 1.2 gsm. Also this embodiment is particularly suitable, if the metallic layer c) contains metallic pigments having an average $d_{50}$ particle size of 5 to 15 $\mu$m.

In addition, it is preferred that the weight ratio of pigment to binder in the metallic layer c) is 0.3:1 to 2:1, more preferably 0.7:1 to 2:1 and most preferably 0.7:1 to 1.8:1. Also this embodiment is particularly suitable, if the metallic layer c) contains metallic pigments having an average $d_{50}$ particle size of 5 to 15 $\mu$m.

In accordance with another particular preferred embodiment of the present invention, any of the first colour layer b) and of the at least one second colour layer d) of the system in accordance with the present invention contains 0.001 to 5% by weight of at least one dye and/or 0.1 to 50% by weight of at least one pigment being no white pigment and no metallic pigment, based on the total dry weight of the first colour layer b) and/or second colour layer d). Each of the at least one first colour layer b) as well as each of the at least one second colour layer d) may comprise one or more white and/or metallic pigments in addition to or as substitute for that/those being no white pigment and no metallic pigment. However, it is preferred that each of the at least one first colour layer b) as well as each of the at least one second colour layer d) does not comprises any white pigment as well as not any metallic pigment.

Also any of the first colour layer b) and of the at least one second colour layer d) preferably contains, depending on the ink system, the viscosity and the application method, 10 to 95% by weight of binder based on the total weight of the first colour layer b) and/or of the at least one second colour layer d), wherein the binder is preferably selected from the group consisting of polyesters, polyethers, polyurethanes, polyamides, polyacrylates, maleinate resins, collophonium resins, ketone resins, alkyd resins, collophonium modified phenolic resins, hydrocarbon resins, silicates, silicones, phenolic resins, urea resins, melamine resins, polyterpene resins, polyvinylalcohols, polyvinylacetates, polyvinylchloride, polyvinylethers, polyvinylpropionates, polymethacrylates, polystyrenes, polyolefines, coumarone-indene resins, aromatic formaldehyde resins, carbamide acid resins, sulfonamide resins, chlorinated resins, nitrocellulose, CAB (cellulose acetate butyrate), CAP (cellulose acetate propionate), cellulose compounds, rubbers, radiation curing resins and arbitrary combinations of two or more of the aforementioned binders.

In addition to the binder or instead of the binder, any of the first colour layer b) and of the at least one second colour layer d) of the system in accordance with the present invention contains, depending on the ink system, the viscosity and the application method, more than 0 to 90% by weight of solvent based on the total weight of the first colour layer b) and/or of the at least one second colour layer d), wherein the solvent is preferably selected from the group consisting of mineral oils, vegetable oils, fatty acid esters, alcohols, esters, ethers, glycols, water, aromatic compounds, monomers and oligomers with hydroxy-, amino-, alkoxy-, carboxy-, acrylic or vinyl functionality and arbitrary combinations of two or more of the aforementioned solvents.

Furthermore, also any of the first colour layer b) and of the at least one second colour layer d) of the system in accordance with the present invention may contain one or more additives. Examples for such additives are those selected from the group consisting of rheological additives, adhesives, defoamers, slip additives, plasticizers, anti-corrosion additives, gloss additives, waxes, wetting agents, curing agents, chelating agents, photoinitiators, inhibitors, desiccants, stabilizers, emulsifiers, pH adjustment additives, abrasions resistance additives, antistatic additives, preservatives, light protection agents, matting agents and arbitrary combinations of two or more of the aforementioned additives.

In accordance with a further particular preferred embodiment of the present invention, the at least one dye and/or at least one pigment included in the first colour layer b) is different from the at least one dye and/or at least one pigment included in the at least one second colour layer d). This leads to a particularly distinct flip-flop effect.

In a further development of the idea of the present invention the first colour layer b) and/or the at least one second colour layer d) has a thickness of 0.3 to 100 μm and preferably of 0.5 to 10 μm.

Particular good results are obtained, when the ink coverage of all of the at least one first colour layers b) on the lower layer a) is 70 to 100%, more preferably 80 to 100% and most preferably 90 to 100%.

Likewise thereto, it is preferred that the ink coverage of all of the at least one second colour layers d) on the metallic layer c) is 10 to 90% and more preferably 30 to 80%.

Apart from the above described layers, the system may comprise one or more further layers. For instance, the system may comprise above the metallic layer c) one further white layer with a transparency in vertical direction of at least 50%. This further white layer may be arranged between the metallic layer c) and the at least one second colour layer d) or between two of the second colour layers, if at least two second colour layers are present, or above the last of the second colour layers.

However, it is preferred that the system does not comprise any further metallic layer in addition to the metallic layer c). In addition, it is preferred that the system does not comprise between the lower layer a) and the metallic layer c) any further layer in addition to the at least one first colour layer b). Moreover, it is also preferred that above the metallic layer c) only the at least one second colour layer d) and optionally one or more further white or non-coloured layer with a transparency in vertical direction of at least 50% is arranged.

As set out above, a particular advantage of the present invention is that a flip-flop effect is obtained, even without incorporating any interference pigment into any layer of the system. Accordingly, it is particularly preferred that the system in accordance with the present invention does not contain any interference pigment.

The flop effect can be calculated with the colour data measured at different viewing angles. For this calculation the measured a and b values that refer to the Lab colour space can be used. The L*a*b* colour space describes mathematically all perceivable colours in the three dimensions L for lightness and a and b for the colour opponents green-red and blue-yellow. The colour travel can be described as delta a/b between measurements at different viewing angles.

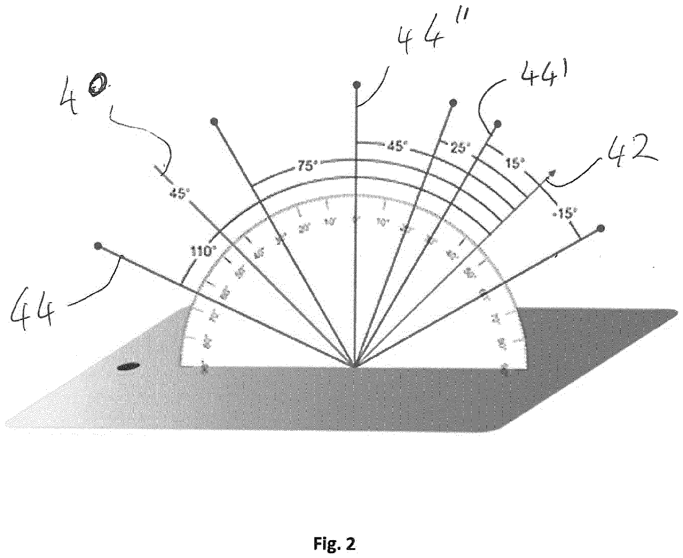

According to a particularly preferred embodiment of the present invention, the delta a/b is at least 15, more preferably at least 30 and most preferably at least 38, wherein the delta a/b is determined according to the equation delta a/b=$((a[15°]-a[110°])^2-(b[15°]-b[110°])]^2)^{1/2}$, wherein a[15°] is the a-value measured at an observation value of 15°, a[110°] is the a-value measured at an observation value of 110°, b[15°] is the b-value measured at an observation value of 15° and b[110°] is the b-value measured at an observation value of 110°, wherein the measurement is performed by irradiating in a dark environment standardized light type onto the system at an angle of incident of 45° with respect to the horizontal direction, wherein the angle of reflection of 135° with respect to the horizontal direction is defined as an observation angle of 0°. The observation angles can be seen in figure 2. The higher the numeric value of delta a/b, the higher the flip-flop effect.

In the above embodiment, the delta a/b between the measurement at 15° and 110° was chosen as a means to describe the colour travel. However, in other embodiments other angles might also be suitable to describe the flop effect.

As indicated above, the lower layer a) may be the substrate, such as a foil/film, a paper or the like, or the lower layer a) may be arranged on the substrate, wherein the lower layer a) is for instance an ink. Independently, from whether the lower layer a) is the substrate or whether the lower layer a) is arranged on the substrate, the substrate may be made of a material being selected from the group consisting of foils/films, metals, glazings, papers, cardboards, cartons, glasses, woods, textiles, nonwovens, silicones, rubbers and arbitrary combinations of two or more of the aforementioned materials.

As further set out above, in accordance with a particular preferred embodiment of the present invention, the system is an ink system. This embodiment may be used with any known printing technique, such as offset, lithography, intaglio printing, flexographic printing, gravure printing, screen printing, digital printing, inkjet printing, pad printing, transfer printing, letter printing and the like.

Another aspect of the present invention is the use of a system and preferably an ink system according to the present invention for coating and in particular printing a substrate.

Subsequently, the present invention is described by means of illustrating, but not limiting figures, wherein:

Fig. 1    shows an object comprising a substrate, which is coated with an ink system in accordance with one embodiment of the present invention.

Fig. 2    shows schematically a method for measuring the angle dependent colour measurement of a system in accordance with one embodiment of the present invention.

Fig. 3    shows the results of angle dependent colour measurements of four different systems in accordance with one embodiment of the present invention.

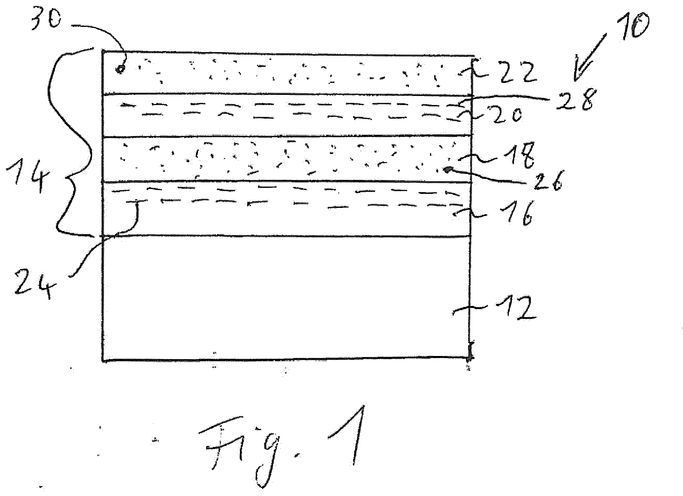

Fig. 1 shows an object 10, which comprises a substrate 12, which is coated with an ink sequence 14 in accordance with one embodiment of the present invention. The ink sequence 14 comprises from the bottom up a lower layer 16, a first colour layer 18, a metallic layer 20 and a second colour layer 22. The lower layer 16 contains white pigment 24 preferably consisting of titanium oxide having an average diameter of 0,1 to 50 $\mu$m in a concentration of about 30 to 90 % by weight of white pigment based on the total weight of the dried lower layer 16. Moreover, the first colour layer 18 contains about 1 to 15 % by weight of dye or pigment, based on the total weight of the dry first colour layer 18, whereas the metallic layer 20 includes 30 to 60 % by weight of metallic effect pigment, e.g. Aluminium flakes, 24, in the form of flakes consisting of Aluminium having an average particle diameter of about 10 $\mu$m, based on the total weight of the dried metallic layer 20 and the second colour layer 22 contains about 1 to 15 % by weight of dye or pigment based on the total weight of the dried second colour layer 22.

Fig. 2 shows schematically a method for measuring the angle dependent colour appearance of a system in accordance with one embodiment of the present invention. In a dark environment, a visible light beam 40 with an adjusted intensity and wavelength range is irradiated onto a system 10 as described for instance with regard to Fig. 1 at an angle of 45° with respect to the horizontal direction. Since the angle of incidence with regard to the horizontal direction is the same as the angle of reflection 42 of the irradiated light beam, the angle of reflection 42 is 135° with respect to the horizontal direction. This angle of reflection 42 is defined for the measurement of the angle dependent colour appearance of the system in accordance with the present invention as an observation angle of 0°. In order to measure the angle dependent colour appearance of the system 10, the sum of reflectance and scattering is measured at different observation angles 44, 44',44", for instance - as shown in fig. 2 - at observation angles of -15°, 15°, 25°, 45°, 75° and 110°. Of course, it is also possible to measure the colour appearance at more than six different observation angles or at less than six different observation angles, such as at five different observation angles, such as at observation angles of 15°, 25°, 45°, 75° and 110°.

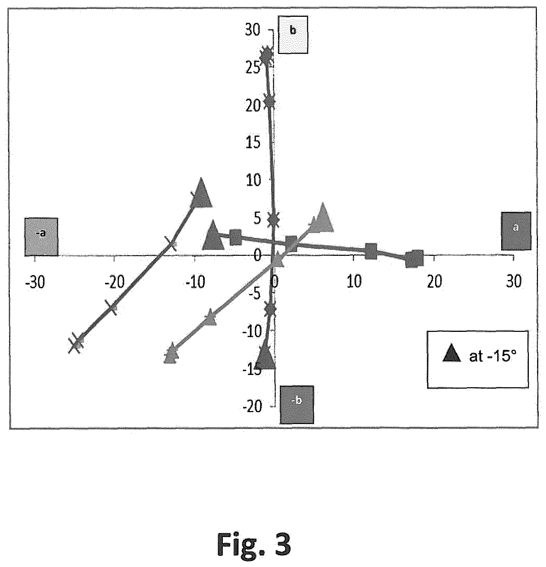

Fig. 3 shows the results of angle dependent colour measurements of four different systems in accordance with one embodiment of the present invention. The angle dependent colour measurements of the four different systems have been performed as described above with regard to figure 2 at observation angles of -15°, 15°, 25°, 45°, 75° and 110°. At each observation angle, the a-value as well as the b-value of each system have been determined. The respective values are plotted in figure 3 for any of the four systems, wherein the largest triangle of each graph represents the value measured at an observation angle of -15°. The further markers in each graph starting from the largest triangle represent the respective values determined at observation angles of 15°, 25°, 45°, 75° and 110°. The horizontal axis of figure 3 shows the measured a-values, whereas the vertical axis of figure 3 shows the measured b-values. As it can be seen from figure 3, the a-values and b-values of all four samples differ depending of the observation angle at which they have been determined. This shows, that all four systems showed a flip-flop effect.

Subsequently, the present invention is described by means of illustrating, but not limiting examples.

**Example 1**

Solvent-based flexographic inks based on NC/PU have been printed on $30\mu$m thick foils of oriented polypropylene (OPP). The following inks from the hubergroup Deutschland GmbH: 61GU336812 (Yellow; abbreviated subsequently as Y), 62GU336816 (Magenta; abbreviated subsequently as M), 63GU336821 (Cyan; abbreviated subsequently as C), 69GU336827 (Black; abbreviated subsequently as Bk), 77GU289376 (White; abbreviated subsequently as W) and 76GU318960 (Silver; abbreviated subsequently as S) were printed onto the foils at a print viscosity 20s in a DIN 4 cup. The inks have been diluted with ethanol/ethyl acetate 9:1. The pigment-binder ratio in the dry ink film was 0,9: 1 to 1,5:1 for the inks Y, M, C and Bk, 1:0,3 for W and 0,9:1 for S, wherein between 0,7 and 1,5 g/m$^2$ of dry ink (for each ink) have been applied. The following ink sequences have been printed, from the bottom up:

| System | Layer 1 | Layer 2 | Layer 3 | Layer 4 | Layer 5 | Layer 6 |
|--------|---------|---------|---------|---------|---------|---------|
| 1 | White | Yellow | Silver | Magenta | Cyan | Black |
| 2 | White | Yellow | Silver | - | Magenta | Black |
| 3 | White | Magenta | Silver | Yellow | Cyan | Black |
| 4 | White | Magenta | Silver | - | Yellow | Black |
| 5 | White | Cyan | Silver | Yellow | Magenta | Black |
| 6 | White | Cyan | Silver | Yellow | White | Black |

The layers, which were transferred to the respective print forms, were as follows:

| | Layer 1 | Layer 2 | Layer 3 | Layer 4 | Layer 5 | Layer 6 |
|--------|---------|---------|---------|---------|---------|---------|
| Lines/cm | 360 | 360 | 360 | 220 | 360 | 120 |
| Ink volume [cm$^3$/m$^2$] | 4,0 | 3,9 | 3,9 | 8,0 | 3,9 | 16,4 |

The flip-flop effects for each system were measured with a Byk mac I instrument. A five angle measurement for a/b travel evaluation was carried out at observation angles of 15°/25°/45°/75°/110°. In order to assess the degree of the flip-flop effect for each system, the a- and b- values of the Lab colour space were measured at observation angles of 15° and of 110° and therefrom the ratio delta a/b has been determined according to the following equation:

$$\text{Delta a/b}=((a[15°]-a[110°])^2-(b[15°]-b[110°])^2)^{1/2}$$

The higher the numeric value of delta a/b, the higher the flip-flop effect.

For seven different trials, the following results were obtained:

| | Color / Ink Coverage of Layer No. | | | | | | |
|---|---|---|---|---|---|---|---|
| | 1 | 2 | 3 | 4 | 5 | 6 | Delta a/b 15°/110° |
| Trial 1 | White 100 | Yellow 100 | Silver 90 | Magenta 10 | Cyan 30 | Black 0 | 50,9 |
| Trial 2 | White 100 | Magenta 100 | Silver 100 | Yellow 10 | Cyan 50 | Black 0 | 41,1 |
| Trial 3 | White 100 | Cyan 90 | Silver 80 | Yellow 40 | Magenta 20 | Black 0 | 38,9 |
| Trial 4 | White 100 | Cyan 90 | Silver 100 | Yellow 40 | Magenta 0 | Black 10 | 38,9 |
| Trial 5 | White 100 | Yellow 70 | Silver | Magenta 30 | Cyan 20 | Black 20 | 19,9 |
| Trial 6 | White 100 | Magenta 70 | Silver 90 | Yellow 20 | Cyan 10 | Black 30 | 16,6 |
| Trial 7 | White 100 | Cyan 70 | Silver 100 | Yellow 10 | Magenta 10 | Black 20 | 17,0 |

Thus, the highest colour flip-flop effects have been achieved for 90 to 100% ink coverage for the colour ink printed between the white and silver layers, for 80 to 100% ink coverage for the silver layer, for 0 to 10% coverage for the optional black layer and sum of ink coverage of 40 to 60% for all inks printed on the side above the silver, i.e. metallic layer.

In an additional trial, the colours Y, M and C have been extended by 100% with extender 60GU319987, resulting in pigment binder ratios of 0,9:2 to 1,5:2. Also by using these colours, the flip-flop effect was observed.

**Example 2**

In another trial, solvent-based inks based on NC/PU have been tested in gravure printing: Cyan 63GU514973, Magenta 62GU514969, Yellow 61GU515076, Black 69GU515074, White 67GU515182, Silver 66GU515184, and Extender 70GU504288 (hubergroup Deutschland GmbH).

Cyan and Magenta were extended by 120%. Yellow, Silver and white were printed without extender. The inks have again been diluted to 20s in a DIN 4 cup with ethanol/Ethylacetat 9:1.The inks were applied on corona treated OPP film with a Roto Hand Proofer (Pamarco). The following ink sequences have been investigated from bottom to up:

W-Y-S-M-X-Bk, W-S-Y-M-C, W-Y-S-M-Bk and W-S-Y-M-C-Bk.

In this trial it was observed that inks with a higher pigmentation showed less visible flip-flop effect, indicating that transparency was not sufficient at the ink film thickness achieved with gravure printing with standard pigment content. Between 0,7 and 1,5 $g/m^2$ of ink (for each ink) have been applied. The pigment binder ratio was 1,5 : 2 to 3:2 for Yellow, Cyan, Magenta and Silver, and 2 : 3 for White. Delta a/b 15°/110° values of up to 40 have been achieved when yellow was printed between white and silver, and the other inks above or before silver.

**Example 3**

In a third trial the inks from example 2 have been applied using a K-printing-proofer 100 l/cm (RK Print Coat Instruments). The same inks and ink sequences have been applied as in example 2, resulting in an ink film of 0,13 to 0,8$g/m^2$. It was observed that the inks had to be further extended by another 100% to observe the flip-flop effect, resulting in a pigment binder ratio of 1:2 to 1:6 for Yellow, 1:8 to 1:10 for Cyan and Magenta, 1:1,5 for Silver and 1:0,7for White. A delta a/b 15°/110° of 27 has been achieved with the ink sequence white, yellow, silver, cyan, and of 35 for the ink sequence white, yellow, silver, magenta.

**List of References**

| | |
|---|---|
| 10 | System / Coated object |
| 12 | Substrate |
| 14 | ink layer |
| 16 | Lower layer |
| 18 | First colour layer |
| 20 | Metallic layer |
| 22 | Second colour layer |
| 24 | White pigment |
| 26 | First dye |
| 28 | Metallic effect pigment |
| 30 | Second dye |
| 32 | Incident visible light |
| 34 | Visible light reflected by the metallic layer with an intensity of $I_1$ |
| 36 | Visible light entering the lower layer with an intensity of $I_{20}$ |
| 38 | Visible light reflected by the lower layer with an intensity of $I_2$ |
| 40 | Irradiated light beam |
| 42 | Angle of reflection of the irradiated light beam |
| 44, 44', 44" | Angle of measurement of reflectance/scattering/colour shade |

**Claims**

1. A system comprising:

   a) a lower layer (16) containing white pigment (24),
   b) on the lower layer (16) at least one first colour layer (18) containing a dye (24) and/or pigment being different from the white pigment (24) contained in the lower layer (16) and being no metallic pigment,
   c) on the at least one first colour layer (18) a metallic layer (20) containing at least one metallic pigment (28) and
   d) on the metallic layer (20) at least one second colour layer (22) containing a dye (30) and/or pigment being different from the white pigment (24) contained in the lower layer (16) and being no metal effect pigment.

2. The system in accordance with claim 1, wherein at least at an angle of 0 to 45° with respect to the horizontal direction the colour shade of the visible light (34) being reflected and scattered by the metallic layer (20) is different to the colour shade of the visible light (38) being reflected by the lower layer (16).

3. The system in accordance with claim 1 or 2, wherein the white pigment (24) included in the lower layer (16) is selected from the group consisting of titanium dioxide, barium sulfate, zinc oxide, zinc sulfide, lead carbonate, calcium carbonate, aluminium oxide, aluminium silicate and arbitrary combinations of two or more of the aforementioned substances.

4. The system in accordance with any of the preceding claims, wherein the lower layer (16):

   i) is a foil/film and contains 0.1 to 10% by weight, preferably 0.25 to 4% by weight and more preferably 0.75 to 1.5% by weight of white pigment (24) based on the total weight of the lower layer (16), wherein the foil/film has preferably a thickness of 1 to 100 $\mu$m, more preferably of 2 to 50 $\mu$m and most preferably of 10 to 30 $\mu$m, or
   ii) is a paper or cardboard and contains 0.1 to 50% by weight, preferably 1 to 10% by weight and more preferably 3 to 7% by weight of white pigment (24) based on the total weight of the lower layer (16) or
   iii) is an ink and contains 10 to 90% by weight and preferably 30 to 90% by weight of white pigment (24) based on the total weight of the lower layer (16), wherein the ink has preferably a thickness of 1 to 10,000 $\mu$m.

5. The system in accordance with any of the preceding claims, wherein the white pigment (24) included in the lower layer (16) is titanium oxide and preferably rutile and present in the form of particles having an average $d_{50}$ particle size of 0.1 to 50 $\mu$m, preferably of 0.1 to 10 $\mu$m and more preferably of 0.2 to 0.5 $\mu$m.

6. The system in accordance with any of the preceding claims, wherein the metallic layer (20) is an ink having a ratio of pigment to binder in the metallic layer (20) is 0,3:1 to 2:1, preferably 0,7:1 to 2:1 and more preferably 0,7:1 to 1,8:1.

7. The system in accordance with any of the preceding claims, wherein the metallic pigment (28) included in the metallic layer (20) is present in the form of platelets having an average $d_{50}$ size of 2 $\mu$m to 3000 $\mu$m.

8. The system in accordance with any of the preceding claims, wherein the metallic layer (20) has a thickness of 0.1 to 50 $\mu$m, more preferably of 0.5 to 20 $\mu$m and most preferably of 1 to 10 $\mu$m.

9. The system in accordance with any of the preceding claims, wherein the ink coverage of the metallic layer (20) on the at least one first colour layer (18) is 40 to 100%, more preferably 70 to 100%, even more preferably 80 to 100% and most preferably 90 to 100%, wherein the ink coverage is the percentage of the area of the upperst of the first colour layer(s) (18), which is covered by the metallic layer (20).

10. The system in accordance with any of the preceding claims, wherein the dry laydown of the metallic layer (20) is 0.2 to 2 gsm, more preferably 0.3 to 1.5 gsm and most preferably 0.4 to 1.2 gsm.

11. The system in accordance with any of the preceding claims, wherein the weight ratio of pigment to binder in the metallic layer (20) is 0.3:1 to 2:1, more preferably 0.7:1 to 2:1 and most preferably 0.7:1 to 1.8:1.

12. The system in accordance with any of the preceding claims, wherein any of the first colour layer (18) and of the at least one second colour layer (22) contains 0.001 to 5% by weight of at least one dye (26, 30) and/or 0.1 to 50% by weight of at least one pigment being no white pigment and no metallic pigment, based on the total dry weight of the first colour layer (18) and/or second colour layer (22).

13. The system in accordance with any of the preceding claims, wherein the at least one dye (26) and/or at least one pigment included in the first colour layer (18) is different from the at least one dye (30) and/or at least one pigment included in the at least one second colour layer (22).

14. The system in accordance with any of the preceding claims, which does not contain any interference pigment.

15. The system in accordance with any of the preceding claims, wherein the delta a/b is at least 15, more preferably at least 30 and most preferably at least 38, wherein the delta a/b is determined according to the equation delta $a/b=((a[15°]-a[110°])^2-(b[15°]-b[110°])]^2)^{1/2}$, wherein a[15°] is the a-value measured at an observation value of 15°, a[110°] is the a-value measured at an observation value of 110°, b[15°] is the b-value measured at an observation value of 15° and b[110°] is the b-value measured at an observation value of 110°, wherein the measurement is performed by irradiating in a dark environment a standardized light type onto the system at an angle of incident of 45° with respect to the horizontal direction, wherein the angle of reflection of 135° with respect to the horizontal direction is defined as an observation angle of 0°.

Fig. 1

**Fig. 2**

**Fig. 3**

Europäisches
Patentamt

European
Patent Office

Office européen
des brevets

# EUROPEAN SEARCH REPORT

Application Number

EP 18 15 6380

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 173 816 A2 (BASF SE [DE]) 14 April 2010 (2010-04-14) | 1-14 | INV. C09D11/00 B32B27/20 |
| Y | * paragraphs [0042], [0043], [0049], [0050], [0057], [0058], [0093]; claims 8,9; examples 27,28,34 * | 15 | |
| X | US 2003/017316 A1 (PFAFF GERHARD [DE] ET AL) 23 January 2003 (2003-01-23) | 1-14 | |
| Y | * paragraphs [0005], [0011] - [0013], [0025], [0027], [0029], [0030], [0039], [0044], [0063]; claims 1-32 * | 15 | |
| Y | US 2006/068116 A1 (CHILLA MARC [DE] ET AL) 30 March 2006 (2006-03-30) | 15 | |
| A | * paragraphs [0022], [0023], [0044]; claims 1,2 * | 1-14 | |
| | | | TECHNICAL FIELDS SEARCHED (IPC) |
| | | | C09D B32B |

The present search report has been drawn up for all claims

| Place of search | Date of completion of the search | Examiner |
|---|---|---|
| Munich | 26 July 2018 | Feldmann, Gabriele |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 15 6380

This annex lists the patent family members relating to the patent documents cited in the above-mentioned European search report.
The members are as contained in the European Patent Office EDP file on
The European Patent Office is in no way liable for these particulars which are merely given for the purpose of information.

26-07-2018

| Patent document cited in search report | | Publication date | Patent family member(s) | | Publication date |
|---|---|---|---|---|---|
| EP 2173816 | A2 | 14-04-2010 | BR | PI0814282 A2 | 03-02-2015 |
| | | | CN | 101755013 A | 23-06-2010 |
| | | | EP | 2173816 A2 | 14-04-2010 |
| | | | ES | 2436495 T3 | 02-01-2014 |
| | | | JP | 5587188 B2 | 10-09-2014 |
| | | | JP | 2010534726 A | 11-11-2010 |
| | | | KR | 20100044857 A | 30-04-2010 |
| | | | RU | 2010105676 A | 27-08-2011 |
| | | | US | 2010186891 A1 | 29-07-2010 |
| | | | US | 2015147493 A1 | 28-05-2015 |
| | | | WO | 2009010521 A2 | 22-01-2009 |
| US 2003017316 | A1 | 23-01-2003 | DE | 10128488 A1 | 19-12-2002 |
| | | | EP | 1270683 A2 | 02-01-2003 |
| | | | JP | 2003131029 A | 08-05-2003 |
| | | | US | 2003017316 A1 | 23-01-2003 |
| US 2006068116 | A1 | 30-03-2006 | EP | 1682285 A1 | 26-07-2006 |
| | | | ES | 2308564 T3 | 01-12-2008 |
| | | | JP | 2008514408 A | 08-05-2008 |
| | | | US | 2006068116 A1 | 30-03-2006 |
| | | | US | 2008248292 A1 | 09-10-2008 |
| | | | WO | 2006036828 A1 | 06-04-2006 |

EPO FORM P0459

For more details about this annex : see Official Journal of the European Patent Office, No. 12/82

**EP 3 524 647 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7077897 B2